# EUROPEAN PATENT APPLICATION

(11) **EP 2 214 132 A1**
(43) Date of publication of application: **04.08.2010**
(21) Application number: 10151357.0
(22) Date of filing: 22.01.2010
(51) Int. Cl.: G06Q 30/00

(54) **Targeted advertising**

(30) Priority: 29.01.2009 US 361894
(71) Applicant: TV Works, LLC, Philadelphia, PA 19103 (US)
(72) Inventor: Sodah, Sunil, Mill Valley, CA 94941 (US)
(74) Representative: Watterson, Peer Marten John

(57) **Abstract**

Systems and methods for providing advertisements to users based on usage of goods and/or services are described. In some examples, the advertisements are tied to the actual goods and/or services used. In other examples, the advertisements relate to complementary goods or services. In yet further examples, the advertisements are not necessarily based on the consumption of goods or services in an individual household but may be tied to a related household or a designated user or group of users.

## Description

### Technical Field

Aspects generally relate to computing systems. More particularly, aspects relate to computer systems that facilitate providing information to users.

### Related Art

Corporations spend significant funds every year advertising their products and services to consumers. The advertisements are designed to appeal to specific groups of these consumers. To reach the specific groups, the advertisements are placed where the desired consumers are most likely to see and positively react to the advertisements, with the goal of increasing the corporations' sales of products and/or services featured in the advertisements.

Advertisements are commonly ignored because the advertisements are reaching consumers who are not part of the target audience. These advertisements are not effective. In contrast, advertisements (referred to herein as "targeted advertisements") that reach their target audience are more effective in influencing users' subsequent purchase of goods and services and are, accordingly, the best value for corporations' advertising dollars.

Broadcasting of advertisements (via television, radio, e-mail, and websites) is known. Also, interactive advertisements that prompt users for input prior to permitting access or operation of websites or television programming are also known. However, these interactive advertisements are generally considered burdensome or intrusive as they are reaching more than a desired target audience.

### Summary

One or more aspects relate to obtaining usage information of goods and/or services and providing corresponding advertisements to users. In some embodiments, the advertisements are tied to the actual goods and/or services used by a consumer. In other embodiments, the advertisements relate to complementary goods or services. In yet further embodiments, the advertisements are not necessarily based on the consumption of goods or services by a user or users in an individual household but may be tied to a related household or a designated user or group of users. These and additional aspects are described below.

### Brief Description of the Drawings

Figure 1 show an advertisement being provided to a user based on a user's activity in accordance with one or more illustrative embodiments.

Figure 2 shows a display device providing programming/displayed content and an advertisement to a user in accordance with one or more illustrative embodiments.

Figure 3 shows an advertisement being provided to a first output device in accordance with one or more illustrative embodiments.

Figure 4 shows an advertisement being provided to an output device which is not directly connected to the receiver that received original information regarding the usage of goods/services in accordance with another illustrative embodiment.

Figure 5 shows yet another illustrative embodiment in which usage of goods and services at one location results in an advertisement being provided at a second location.

Figure 6 shows an illustrative example of a receiver in accordance with various embodiments.

Figure 7 shows an illustrative process and variations for providing advertising to a user based on sensor input in accordance with one or more illustrative embodiments.

Figure 8 shows various types of sensors that may be used in combination with receivers in accordance with embodiments.

Figures 9A and 9B show receivers and associated displays in accordance illustrative embodiments.

Figure 10 shows multiple receivers and multiple displays in accordance with illustrative embodiments.

Figure 11 shows a receiver receiving programming and advertisements and providing the received information to a display in accordance with embodiments.

Figure 12 shows a receiver providing programming and stored advertisements to display in accordance with embodiments.

Figure 13 shows a receiver providing programming and separately downloaded advertisements to display in accordance with embodiments.

### Detailed Description

The various aspects summarized previously may be embodied in various forms. The following description shows by way of illustration of various combinations and configurations in which the aspects may be practiced. It is understood that the described aspects and/or embodiments are merely examples, and that other aspects and/or embodiments may be utilized and structural and functional modifications may be made, without departing from the scope of the present disclosure.

It is noted that various connections are set forth between elements in the following description. It is noted that these connections in general and, unless specified otherwise, may be direct or indirect and that this specification is not intended to be limiting in this respect.

For the purpose of aiding the understanding of the reader, the following description is separated into the following subheadings: targeted advertising based on sensor input; system-level hardware configurations; receiver configurations; advertising processes; sensors; receivers and displays; and advertisement processing.

### Targeted Advertising Based On Sensor Input

One or more aspects relate to providing advertisements for goods and/or services to a user based on the consumption of goods or the need for services.

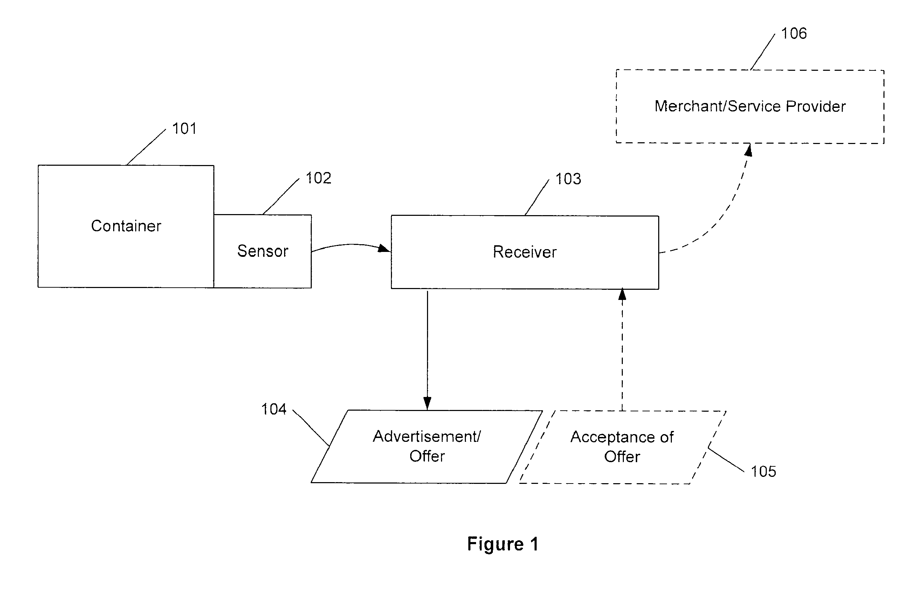

Figure 1 shows an illustrative example of a receiver 103 that provides an advertisement and/or offer 104 to a user based on information from a sensor 102. In this example, a container 101 includes a sensor 102 attached to it. The sensor may be of any type that allows a determination of the status of the container. The status of the container may be the amount of material in the container, the level of the material in the container, the weight of the container, the pressure inside the container, whether or not the level of material inside the contain is above or below a given threshold, etc. This status information is determined by sensor 102 and provided to receiver 103.

For purposes herein, "sensor" is used to encompass both sensors that include transmitting circuitry that forward signals to receivers and the combination of sensors and separate transmitting circuitry that can be attached to sensors to forward signals to receivers.

Sensor 102 may be any type of sensor that determines a status or change in status in the container 101. For example, sensor 102 may be optical, contact (physical), capacitive, inductive, resistive, magnetic, any combination of these types of sensors or related sensors as are known.

The output of sensor 102 is received by receiver 103. Receiver 103 may be any device configured to receive the output of sensor 102, process the output, and provide an advertisement/offer 104 to a user. For instance, receiver 103 may be a set-top box associated with a television subscription service (including but not limited to cable television, satellite television, and fiber-optic television providing systems). Alternatively, receiver 103 may be a personal computer, a personal computing device (including a PDA or cell phone or the like), digital video recorder (DVR), or game console that is configured to receive the output from sensor 102 and is configured to provide an advertisement/offer 104 to a user.

The advertisement/offer 104 may include displayed text and/or graphics that appears on a user's display device. Alternatively, the advertisement/offer 104 may include other forms including a telephone call from a representative of the company, an e-mail, a facsimile transmission, physical mail, an SMS message delivered to a cell phone, and the like. Further, the receiver 103 may be configured to automatically reorder a product when the product is consumed or used up.

In a first embodiment, receiver 103 only provides the advertisement/offer 104 to the user. In another embodiment, the receiver 103 is configured to receive a user's response to the advertisement/offer 104. As shown in Figure 1, the receiver 103 receives an acceptance 105 of the offer (or equally a denial of the offer). The receiver 103 may then forward the acceptance of the offer to a merchant/service provider 106 for fulfillment.

The signal can be transmitted via wired or wireless pathways or any other known convenient mechanism. The wireless signals, for instance, can be infrared or radio signals or any other known convenient wireless signal. The signals transmitted from the product, appliance, or item are received by the receiver, such as a set-top box or any other known or convenient receiver. Once the receiver receives a signal, it can take some action as to inform the individual of the occurrence (consumption of a product or maintenance issue associated with a machine, for example) and target some related advertisement to the individual, or attempt to sell some related product or service to the individual based on the signal received.

For example, container 101 may be a detergent container that contains laundry detergent. Sensor 102 may be provided separate from or integrated with container 101. As a user uses the laundry detergent from container 101, sensor 102 provides information to receiver 103. Sensor 102 may continuously or periodically provide information to receiver 103. Alternatively, sensor 102 may provide information to receiver 103 only when the level of laundry detergent in container 101 falls below a predetermined level (for instance, 10% of the original volume of detergent). In this example, sensor 102 may be a weight sensor, a pressure sensor, or volumetric sensor as is known in the art.

Based on the information from sensor 102, receiver 103 transmits an advertisement/offer 104 to a user. In one instance the information transmitted to the user may be merely an advertisement for the purchase of additional laundry detergent. In another instance, the user may be provided with an offer for the purchase of larger detergent. The offer may include a coupon or discount that may be applied to the purchase of laundry detergent of the same or a competing brand. In yet another instance, the offer may provide for subsequent fulfillment by a merchant. For example, the acceptance of the offer 105 may be received by receiver 103 and transmitted to a merchant/service provider 106. The receiver 103 may transmit the user's acceptance of the offer 105 directly to the merchant/service provider 106 or may transmit the acceptance of the offer 105 to an upstream server for subsequent transmission to the merchant/service provider 105. The upstream server may be a cable television (or other television) headend, switching center, network relay location, satellite, and the like. The merchant/service provider 106 may then deliver the requested laundry detergent to the user.

The receiver can target the user for the interactive television message when the television is turned on. The advertisement may take the form of an alert that the detergent is about to be depleted and may optionally provide an offer for a new detergent container to be delivered to the user.

At least one advantage of having a sensor 102 that determines a level of larger detergent in container 101 is that the user can be provided with the opportunity to replenish the laundry detergent prior to using the last of the detergent in container 101.

In another example, container 101 may be a trash container with a barcode sensor as sensor 102. When a user deposits trash in the container 101, sensor 102 may attempt to scan for a barcode on the trash. Alternatively, the sensor 102 may wait for a user to manually scan a barcode using sensor 102. For instance, if a user has finished a bottle of wine, the user may scan a barcode on the bottle of wine using sensor 102. Sensor 102 may then transmit the scanned barcode information to receiver 103. The receiver 103 next provides an advertisement/offer 104 to the user to replace the bottle of wine with the same or a different selection of wine. Here, the user may accept an offer and transmit the acceptance 105 to the receiver 103. To accept an offer, the user may operate a remote control for the receiver 103, respond to an e-mail or SMS, operate a user interface via a mouse, and the like. The receiver 103 may then transmit the acceptance of the offer 105 to the merchant/service provider 106 for fulfillment of the user's selection.

In yet a further example, container 101 may be a refrigerator that is capable of performing a self-diagnosis. If the refrigerator determines that it requires maintenance due to an error condition or that it is due for scheduled maintenance, the refrigerator (container 101) may forward a maintenance request via sensor 102 to receiver 103. Receiver 103 may then offer (via advertisement/offer 104) to set up a service visit from a technician to service the refrigerator. The user may then accept the offer (via acceptance of offer 105) to schedule the service technician (merchant/service provider 106).

In another example, sensor 102 is not associated with a container 101 but is instead a sound or activity monitor in a bathroom. If sensor 102 detects multiple flushings of a commode within a certain period of time, sensor 102 may forward a signal to receiver 103, where the signal indicates that someone may have intestinal distress. Receiver 103 may then generate advertisement/offer 104 pertaining to antacid/anti-gas over-the-counter medications.

Here, in these examples, advertisements pertaining to products and/or services are targeted to individuals who most likely need or desire a particular product or service more than other individuals based on the actual consumption of goods or needs for services pertaining to the individual user. The consumption or needs are provided by feedback from sensors in the form of signals from existing products, appliances, or items belonging to the individual.

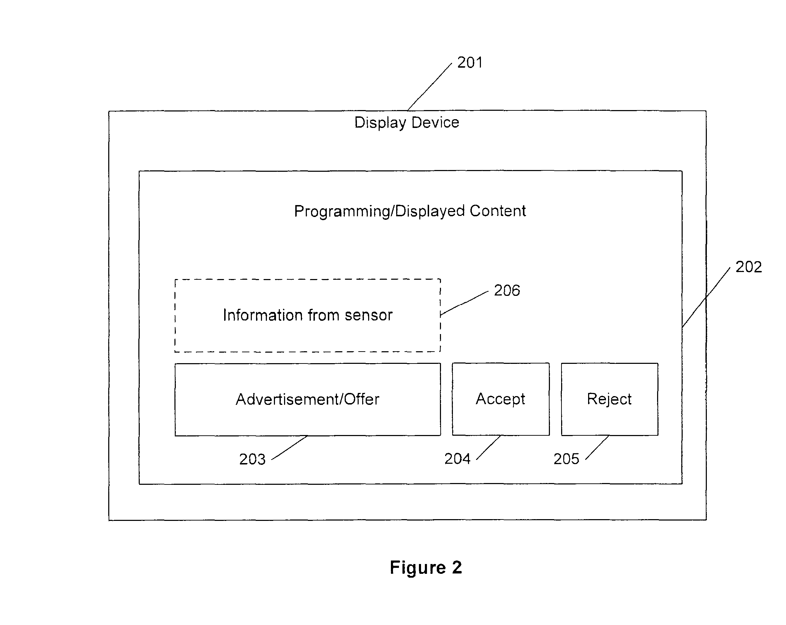

Figure 2 shows a display device providing programming/displayed content and an advertisement to a user. Here, the advertisement may be an interactive television advertisement. For instance, the advertisement may be for the replacement of laundry detergent. Figure 2 shows display device 201 providing programming/displayed content 202 to a user. Advertisement/offer 203 is shown in Figure 2 as overlaid on top of the programming/displayed content 202. In the example of Figure 2, the user is provided with Accept 204 and Reject 205 user interfaces. That it is appreciated that other user interfaces may be provided in place of the user interface of Figure 2. For instance, the Reject 205 user interface may be eliminated such that, if a user does not accept the advertisement /offer 203 within a prescribed period of time (for instance five minutes), the advertisement/offer 203 and the Accept 204 user interface is removed with the assumption that the user does not desire to accept the offer. Figure 2 further shows the display of additional information from the sensor in the region 206. Here, specific information relating to the received information from the sensor is provided to the user. For instance, a user may find it helpful to understand why he is receiving the advertisement/offer 203. Being told that he is about to run out of laundry detergent may help him be more receptive to an advertisement for laundry detergent 203 as compared to, for example, an advertisement for a new magazine (unrelated to the user's activities or current needs).

### System-Level Hardware Configurations

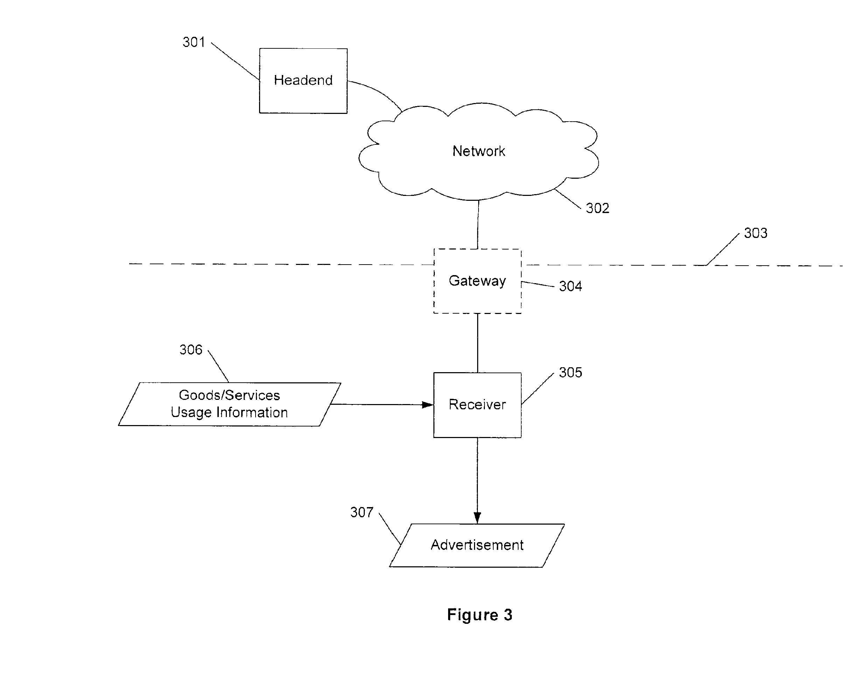

Figure 3 shows an advertisement being provided to a first output device in an illustrative embodiment.

Figure 3 includes a head end 301 connected to a network 302. Network 302 may be a cable television distribution network, satellite television destination network, fiber-optic network, or any other network. Here, the term "head end" is used generally to refer to at least one source from where displayed programming or advertisements originate.

Network 302 is connected to receiver 305 across threshold 303. Threshold 303 is shown figuratively in Figure 3 as a dashed line signifying a separation between network 302 and receiver 305. In some environments (for example, in fiber-optic communication systems), a pathway between network 302 and receiver 305 may include a gateway 304. Gateway 304 is shown in dashed lines as it may be used in some implementations but not in others.

A sensor (not shown in Figure 3) receives goods/services usage information 306 and transmits the information to receiver 305. In response, receiver 305 outputs an advertisement 307 to a user. In one example, the receiver 305 may include the advertisement 307 and be able to provide the advertisement to the user immediately and/or when the user is watching television. Alternately, if the receiver 305 is not currently storing advertisement 307, the receiver 305 may forward information relating to the usage information 306 to head end 301. Head end 301 may then formulate or retrieve an advertisement and forward it to receiver 305 for subsequent providing to the user as advertisement 307.

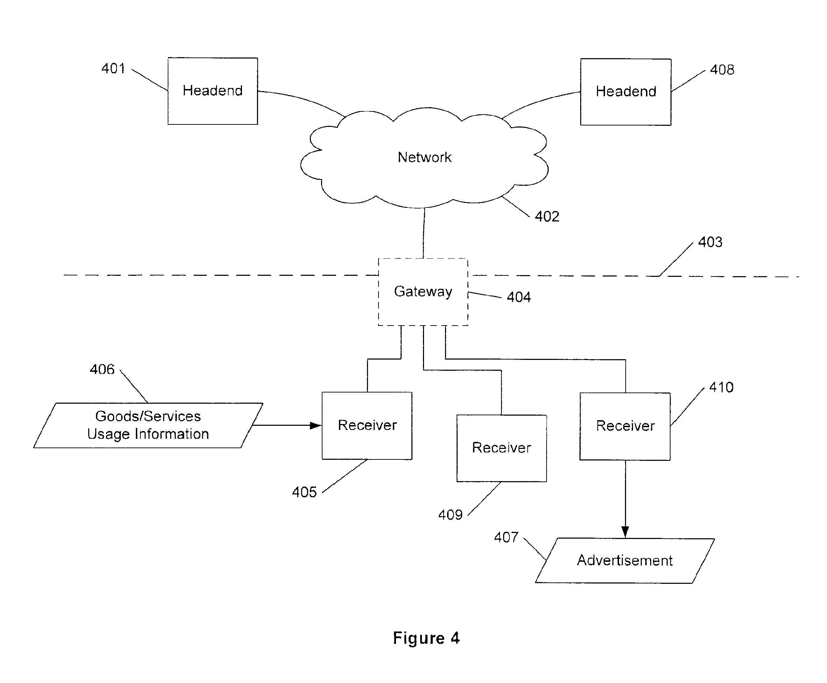

Figure 4 shows an advertisement being provided to an output device which is not directly connected to the receiver that received original information regarding the usage of goods/services in another illustrative embodiment.

Figure 4 shows head end 401 and 408 providing information to network 402. Head end 401 may provide a first set of television programming and head end 408 provide a second set of television programming. Alternatively or in addition, head end 401 may provide a first set of advertisements and head end 408 provide a second set of advertisements. Further, programming may be sent from head end 401 while advertisements are sent from head end 408.

Data from network 402 is provided to a user's location (over threshold 403) to receivers 405, 409, and 410. Goods/services usage information 406 is received by receiver 405. In this example, advertisement 407 is output by receiver 410 for display to the user. In this example, a user may have specified that all advertisements are to be output from a given receiver. Alternatively, the user may be watching a television to which receiver 410 is connected. To timely deliver advertisements associated with goods/services usage information 406, receiver 410 outputs the advertisement 407 to the user. Otherwise, advertisements pertaining to goods/services usage information 406 received by receiver 405 may become stale if only receiver 405 is to output advertisements directly to a user.

In one example, goods/services usage information 406 received by receiver 405 is transmitted to network 402 (and possibly at least one of head ends 401 and 408) with advertising information being transmitted to at least one of receivers 405, 409, and 410. In another example, gateway 404 may be used to provide networking between receivers 405, 409, and 410. In this latter example, goods/services usage information 406 may be locally processed by at least one of receivers 405, 409, and 410 to output advertisement 407 to a user. Further, if enabled, gateway 404 may perform at least some of the processing of goods/services usage information 406 to determine which advertisement 407 should be output to a user.

In another embodiment, a receiver may be used to help monitor the health of an elderly relative or neighbor. For instance, in this embodiment, one or more remote persons can subscribe to get alerts on their receivers based on distress signals sensed and received from an elder relative's receiver.

In yet another embodiment, a receiver may provide security updates regarding someone else's home. For instance, in this embodiment, one or more persons can subscribe to get security alerts from security signals received by their receivers. The receivers may receive signals from another's alarm system via a headend or other network node, for example.

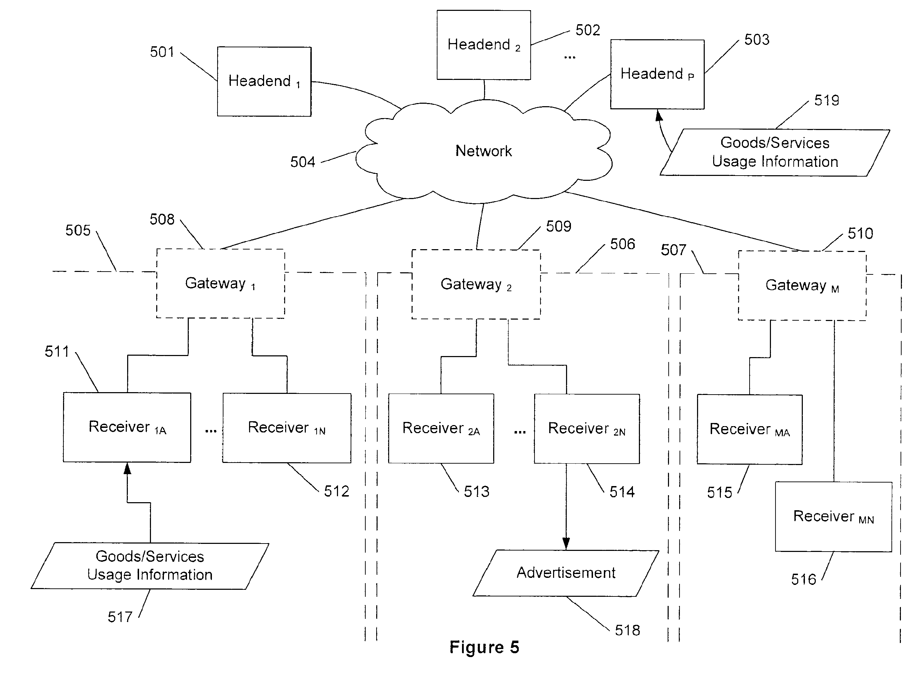

Figure 5 shows yet another illustrative embodiment in which usage of goods and services at one location results in an advertisement being provided at a second location.

Figure 5 shows head end 1 501, head end 2 502, through head end P 503. These head ends may provide at least one of displayable content, programming, and advertisements for display to users. These head ends are connected to network 504. Network 504 is connected to various subscribers' residences as shown by thresholds 505, 506, and 507. Optionally, each of the thresholds may include a gateway (gateway 1 508, gateway 2 509, through gateway M 510).

Each residence may include one or more receivers. For purposes of illustration, each residence is shown to include a number of receivers. It is appreciated that some residences may only have one receiver. Residence 505 includes receivers 1A 511 through receiver 1N 512. Residence 506 includes receivers 2A 513 through receiver 2N 514. Residence 507 includes receivers MA 515 through receiver MN 516.

In this example, goods/services usage information 517 is received by receiver 1A 511 in residence 505. Goods/services usage information 517 (or information relating to the goods/services usage information 517) is transmitted to the network 504 (and possibly to at least one of the head ends 501-503) for processing. The processing may include determining which advertisement or advertisements are appropriate for transmitting to other residences 506 and 507. In this example, an advertisement is transmitted to residence 506 for output to a user in residence 506 as advertisement 518 via receiver 2N 514. This arrangement as shown in Figure 5 maybe beneficial for providing advertisements relating to goods/services that may be relevant to users in a region or users that have an interest in what another user is doing. For example, if a user in residence 505 just finished fertilizing his yard, then the user in residence 506 may be interested in receiving an advertisement and/or an offer relating to fertilizer products. In another example, a celebrity may be living in residence 505. The users in residences 506 and 507 may be interested in purchasing products (and/or using services) used by the celebrity in residence 505. Further, goods/services usage information does not necessarily have to arise from a residence 505. For instance, goods/services usage information 519 may be loaded via an alternative route into one of the head ends (here, head end P 503). This alternative provides the ability for uploading goods/services usage information 519 without requiring a receiver or the manual steps of scanning/reading/monitoring usage information from various users. The goods/service information can come from more than one receiver. Advertisements can be targeted to particular receivers in particular locations based on the receiver identification knowledge available to the headends.

In one embodiment a neighborhood watch group can be alerted of an intrusion in the neighborhood based on a signal triggered from the sensors and received at one of their member's house and alerts dispatched to subscribed receivers in the group.

### Receiver Configurations

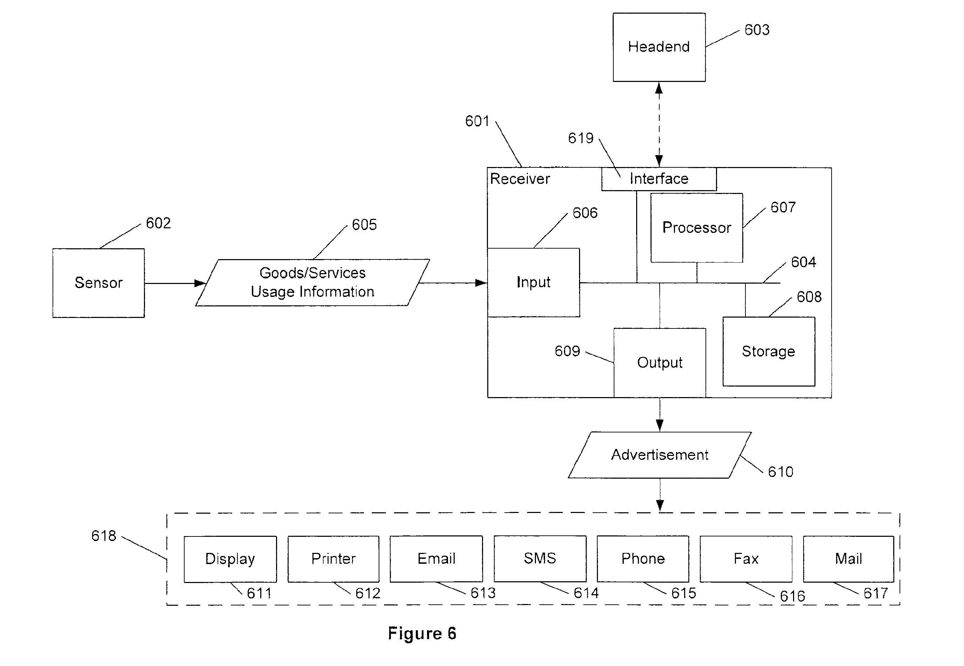

Figure 6 shows an illustrative example of a receiver in accordance with various embodiments.

Figure 6 shows a receiver 601 that receives goods/services usage information and outputs advertisements to a user. Receiver 601 receives goods/services usage information 605 from sensor 602. Receiver 601 may also provide this goods/services usage information 605 to head end 603. The connection between receiver 601 and head end 603 is shown as a dashed line as receiver 601 does not need to constantly be connected to head end 603 and/or constantly update head end 603 with goods/services usage information 605. For instance, some advertisements may be stored locally or generated locally in receiver 601.

Receiver 601 may include an input 606 that receives the goods/services usage information 605. Input 606 may include wired or wireless receiver circuitry that receives the signal from sensor 602. Signals received from sensor 602 are then forwarded to other components within receiver 601. For instance, the received signals may be placed on bus 604 that are forwarded to processor 607, output 609, and/or storage 608. Processor 607 may then determine which advertisement or advertisements may be relevant to the received goods/services usage information 605 and output an advertisement 610 to output 609. Output 609 may include transceiver circuitry to forward advertisement 610 to the user. For simplicity, various ways for a user to receive advertisement 610 are shown collectively as group 618. Receiver 601 is also shown as including interface 619 that receives signals (directly or indirectly) from head end 603. As known in the art, interface 619 may be a single point of communication between receiver 601 and head end 603 or may be two or more points of communication (e.g., where signals are received over one communication medium and where signals are transmitted over another communication medium - satellite signals received and telephone signals output).

Group 618 includes display 611, printer 612, e-mail 613, SMS messaging 614, phone 615, fax 616, and regular mail 617. It is appreciated that the group 618 is illustrative and not exhaustive as other ways of providing advertisement 610 to a user are available.

Bus 604 may be by way of example, and not limitation, an Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Storage 608 includes volatile and nonvolatile, removable and non-removable media implemented in any method or technology for storage of information such as computer readable instructions, data structures, program modules or other data. Storage 608 may include by way of example, and not limitation, hard disk drives, RAM, ROM, Flash memory, removable media, diskettes, CD-ROM, CD-RAM, DVD-related memories, magnetic cassettes, magnetic tape, magnetic disk storage or other magnetic storage devices, or any other medium which can be used to store the desired information and which can accessed by processor 607 and any other components in receiver 601.

Processor 607 may include any processor configured to handle and control the functions of receiver 601. Computer-implemented methods can be implemented using at least processor 607.

### Advertising Processes

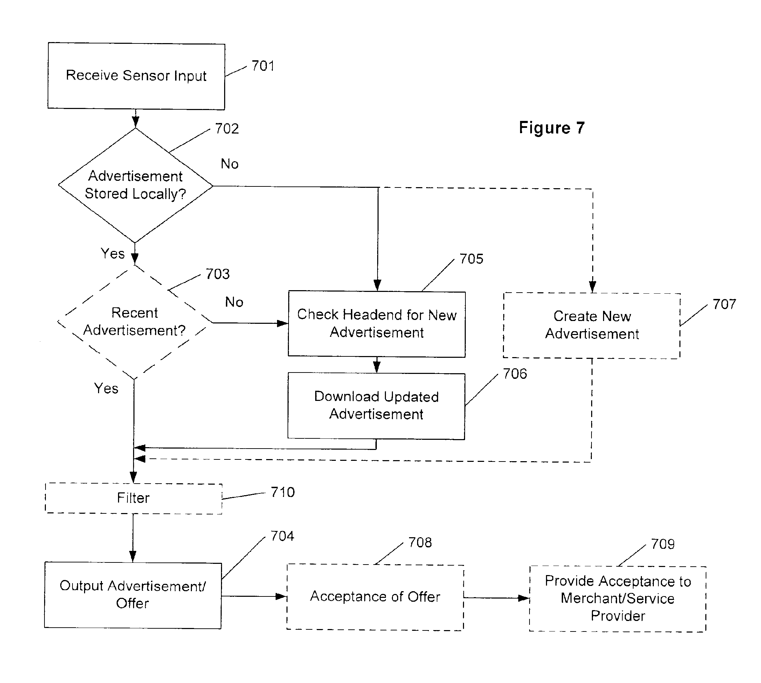

Figure 7 shows an illustrative process and variations for providing advertising to a user based on sensor input in accordance with embodiments. The process of Figure 7 and other processes described herein may be implemented as computer-executable instructions in the receivers disclosed herein, including but not limited to receiver 601.

Figure 7 shows the receiving of sensor input in step 701. Next the system determines if an advertisement is stored locally in step 702. If yes, then the system outputs the advertisement/offer in step 704. If yes, then the system proceeds to step 704 and outputs the advertisement/offer. From step 702, if the advertisement is not stored locally, then the receiver checks the head end for a new advertisement in step 705. Next, if an advertisement is available the receiver downloads the advertisement in step 706. Next, the advertisements/offer is outputted in step 704. Optionally, the system in step 703 may determine if the advertisement is a recent advertisement. This ensures that stale advertisements are not provided to users.

Figure 7 also shows the optional ability for a receiver to create a new advertisement in step 707. Step 707 may be used if the advertisement is not stored locally from step 702. As yet another option, filter 710 may be used to filter how the advertisement/offer is output to a user in step 704.

Filter 710 may include the ability for users to specify where advertisements are received. For instance, a user may specify that advertisements are only to be received via a limited set of receivers. Also, a user may specify that advertisements are only supposed to be received during a certain time and/or date when a viewer is watching television or watching a specific channel or set of channels or programming (for instance, news or talk shows or other types of programming).

Figure 7 further shows the optional steps of the acceptance of an offer in step 708 and the acceptance being provided to a merchant/service provider in step 709 for fulfillment of the accepted offer.

It is appreciated that systems may exist where advertisements are never stored locally. In these situations, the receipt of the sensor input 701 may be sent to the head end in step 705.

### Sensors

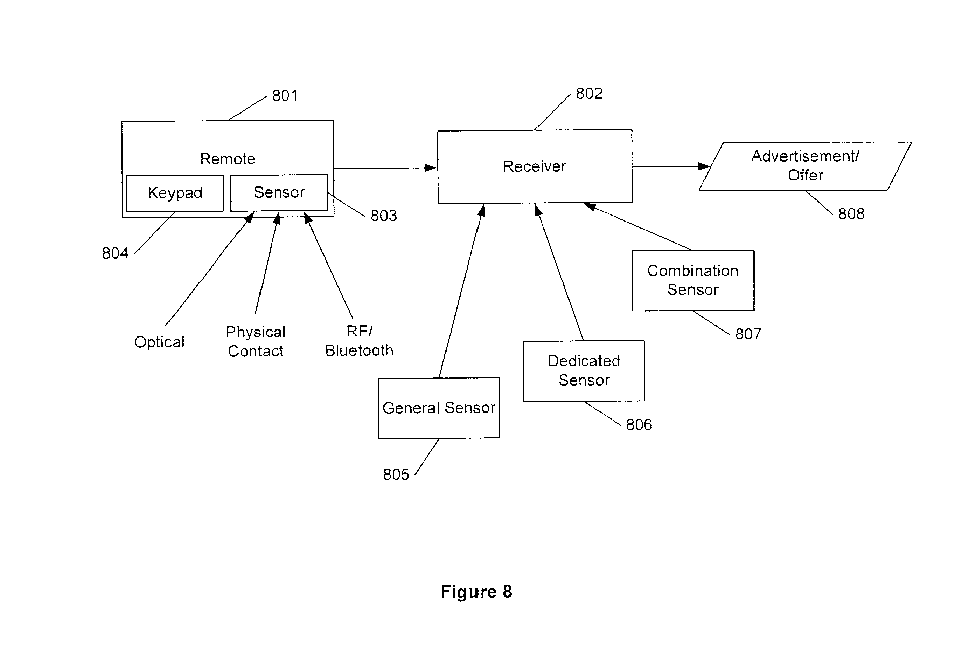

Figure 8 shows various types of sensors that may be used in combination with receivers in accordance with embodiments.

Figure 8 shows receiver 802 receiving signals from various sensors. Remote 801 may include sensor 803. Sensor 803 may be an optical sensor, a physical contact sensor, a radio frequency/Bluetooth sensor, and the like. Further remote 801 may include a keypad 804. In situations where sensor 803 is not functioning or does not receive usage information, then a user may be able to input the usage information via keypad 804. Receiver 802 may receive information from other sensors as well. These other sensors may include a general sensor 805, a dedicated sensor 806, and a combination sensor 807. General sensor 805 may be a sensor which is not specific to a given product or service. For example, general sensor 805 may be a barcode reader or an RF I D reader.

Dedicated sensor 806 may be a sensor tied specifically to a singular product. For example, it may be a sensor attached to a container of laundry detergent to determine the amount of remaining detergent in the container. In another example, dedicated sensor 806 may be a weight sensor that determines the weight of an object placed upon it. For instance, a refrigerator may include a weight sensor at a location that receives containers of milk. As the milk is consumed, the weight of each container is reduced and detected by sensor 806. Of course, users may place other objects in lieu of milk containers on the weight sensor so these other objects are tracked by their change in weight.

Combination sensor 807 may be a sensor that includes a variety of sensors or a processor that coordinates the input among various sensors. For instance, combination sensor 807 may be a car monitoring system that receives input from various systems of the car. For example, the car monitoring system may monitor engine function, tire pressure, mileage, driving conditions, maintenance intervals, and the like. Information from the combination sensor 807 (here, the car monitoring system) gets provided to receiver 802. Finally receiver 802 outputs advertisement/offer 808 for the user.

### Receivers and Displays

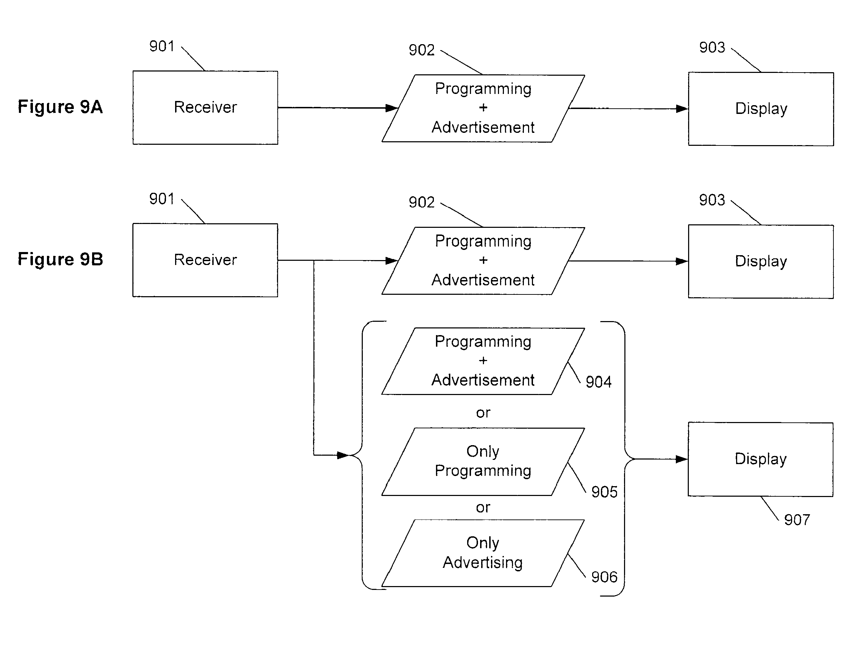

Figures 9A and 9B show receivers and associated displays in accordance with illustrative embodiments.

Figures 9A and 9B show various combinations of receivers and displays. In Figure 9A, receiver 901 outputs programming and an advertisement 902 to display 903. Figure 9B includes the receiver 901, programming and advertisement 902, and display 903 as well. Figure 9B also shows display 907 also connected to receiver 901. Here, in Figure 9B, receiver 901 outputs information to two or more displays 903 and 907. The receiver 901 may provide both programming and advertisements (902 and 904) to the displays 903 and 907, respectively. Alternatively, receiver 901 may selectively provide only programming 905 or only advertising 906 to a display 907. In this example, a user can have all advertising directed to a given display and/or eliminate advertising from another display.

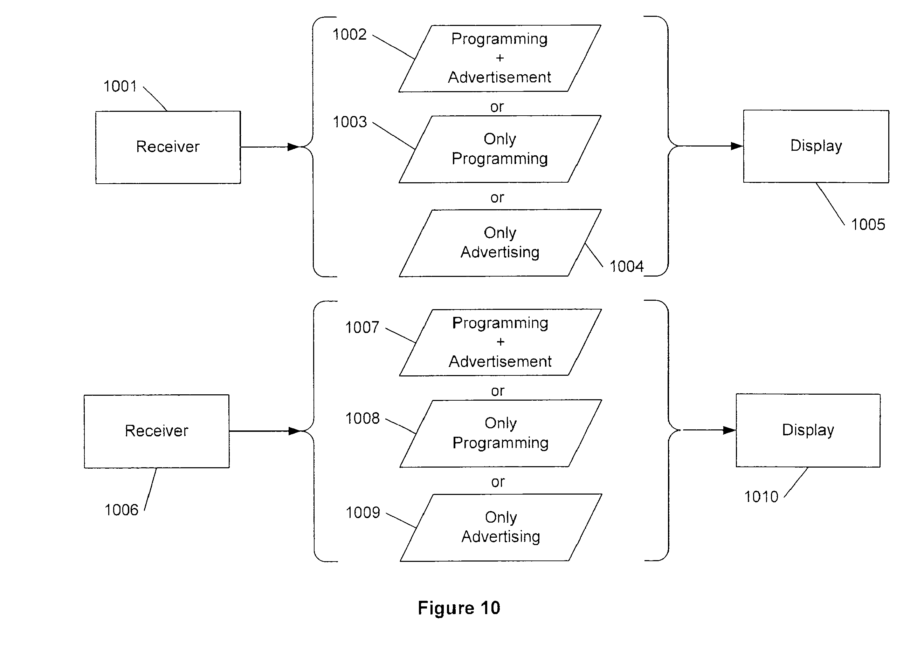

Figure 10 shows multiple receivers and multiple displays in accordance with illustrative embodiments.

Figure 10 shows a system with multiple receivers 1001 and 1006. In this example, receiver 1001 outputs one of programming and advertisement 1002, only programming 1003, or only advertising 1004 to display 1005. Receiver 1006, which may also be located into a residence, may output one of programming and advertisement 1007, only programming 1008, or only advertising 1009 to display 1010. In this example, the receivers 1001 and 1006 may be separately configured to display programming and/or advertisements as desired by the user.

### Advertisement Processing

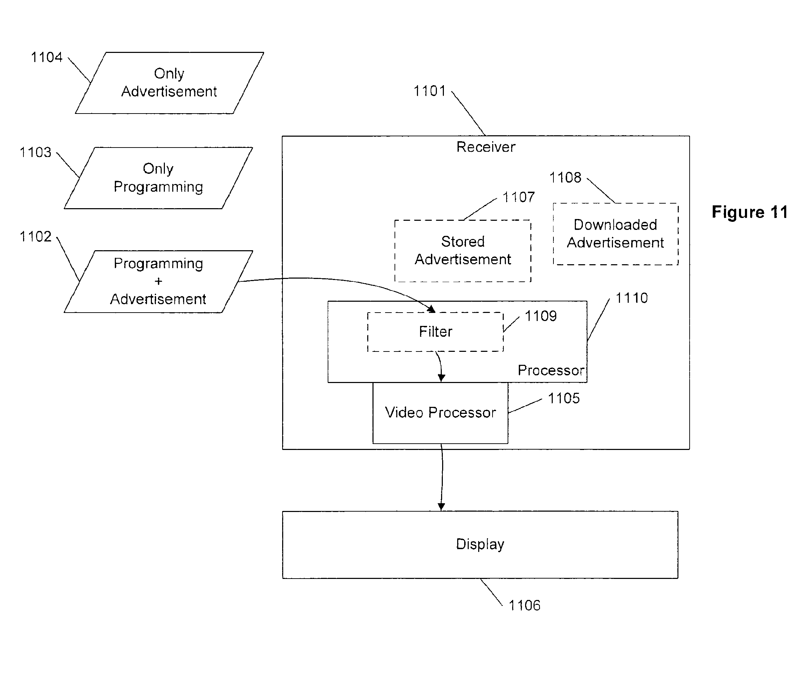

Figures 11-13 show various examples of how advertisements may be output to a display for a user.

Figure 11 shows a receiver receiving programming and advertisements and providing the received information to a display in accordance with embodiments.

Figure 11 shows receiver 1101 connected to display 1106. Receiver 1101 includes a video processor 1105. Video processor 1105 may or may not be part of processor 1110. Receiver 1101 may also include a stored advertisement 1107 and/or a downloaded advertisement 1108. Further, receiver 1101 may optionally include a filter 1109. Filter 1109 may be part of a general processor 1110 that restricts/controls how an advertisement is output to display 1106. In figure 11, three sets of data are available to be downloaded to receiver 1101 including a programming and advertisement 1102, only programming 1103, and only advertisement 1104. In this example, the combination of the programming and advertisement 1102 is downloaded by receiver 1101, handled by processor 1110 and video processor 1105, and output to display 1106. In that the combination of the programming and advertisement 1102 has been combined prior to being received by receiver 1101, video processor 1105 may not need to perform combining operations to combine the programming and advertisement information.

As used herein, downloading is intended to cover both receiving broadcast signals and specific point-to-point data transfers.

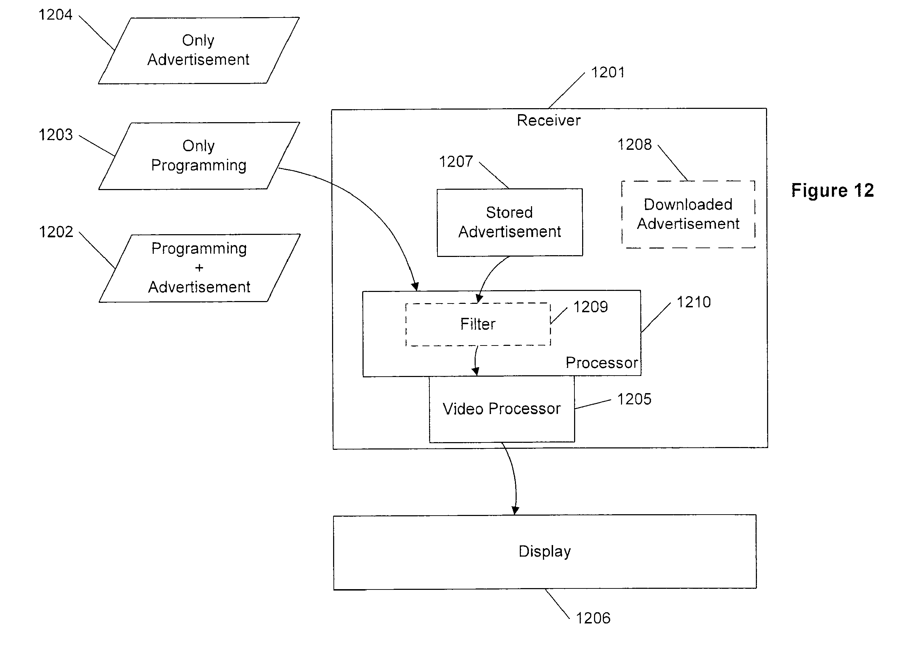

Figure 12 shows a receiver providing programming and stored advertisements to display in accordance with embodiments.

Figure 12 shows receiver 1201 and display 1206. Receiver 1201 may receive programming and advertisement 1202, only programming 1203, and only advertisement 1204. In this example, receiver 1201 receives only programming 1203. An advertisement has been previously stored as stored advertisement 1207 in receiver 1201. Only programming 1203 and stored advertisement 1207 are sent to processor 1210. Optionally, stored advertisement 07 may be filtered by filter 1209 in processor 1210. Video processor 1205 combines stored advertisement 1207 with only programming 1203 and outputs the advertisement to display 1206. Here, stored advertisement 1207 may be a locally generated advertisement or may be a previously downloaded and stored advertisement

Receiver 1201 may optionally include an ability to store downloaded advertisement 1208, however not used in this example.

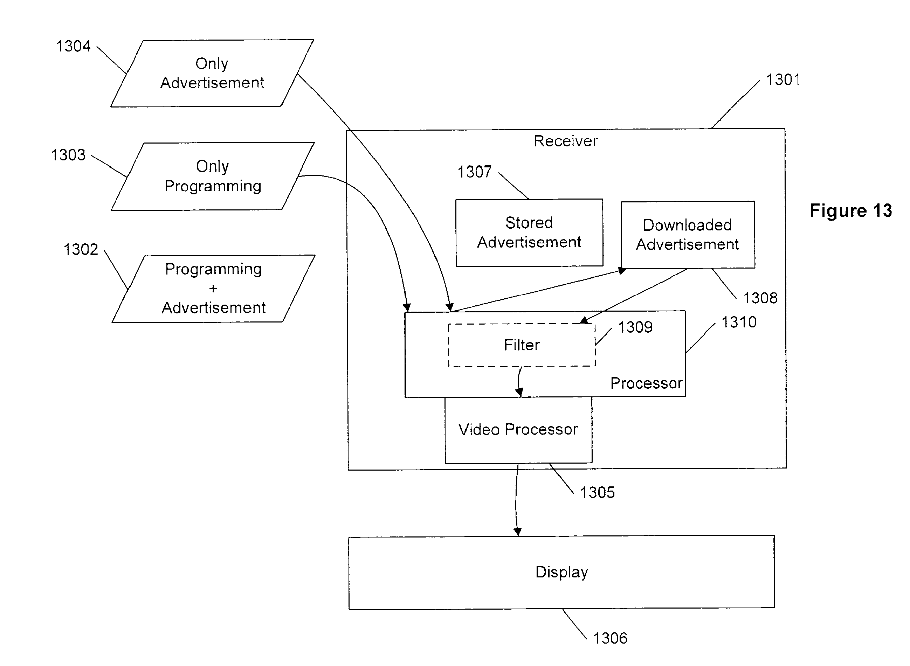

Figure 13 shows a receiver providing programming and separately downloaded advertisements to display in accordance with embodiments.

Figure 13 shows an example where receiver 1301 receives both programming and advertisements as two separate data streams (including only programming 1302 and only advertisement 1304). The combination of programming and advertisement 1303 is not used in this example. Only programming 1302 is received by processor 1310. Only advertisement data stream 1304 is received and at least temporarily stored as downloaded advertisement 1308. Downloaded advertisement 1308 is retrieved by processor 1310 and may be filtered by optional filter 1309 to control how and/or when the advertisement is combined with programming from only programming data stream 1302. Video processor 1305 combines downloaded advertisement 1308 and only programming 1302 into an output suitable for display on display 1306. In this example, the advertisement from only advertisement 1304 data stream is current and may reflect any recent changes made by head ends or merchant/service providers as to what advertisements and offers are available.

In this example, stored advertisement 1307 is not used.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. Numerous other embodiments, modifications, and variations within the scope and spirit of the appended claims will occur to persons of ordinary skill in the art from a review of this disclosure.

There follows a selection of a number of features relating to one or more embodiments of the invention. Where a numbered feature refers to an earlier numbered feature, then all of the elements of that earlier feature are understood to be included with the referring feature. Applicant gives notice that it reserves the right to claim any of the below features, either singularly or in combination.

### Features

1. A receiver comprising:
   an input configured to receive usage information from a sensor; a processor configured to match usage information from the sensor with an advertisement; and
   an output circuit configured to output the advertisement to a first user.
2. the receiver according to feature 1, wherein the usage information relates to usage information from the first user.
3. The receiver according to feature 1, wherein the output circuit is a transceiver and the transceiver is configured to output the advertisement to a display.
4. The receiver according to feature 1, wherein the receiver is a set-top box.
5. The receiver according to feature 3, wherein the processor is configured to combine the advertisement with programming.
6. The receiver according to feature 3, wherein the transceiver is configured to receive an acceptance signal from the first user, and
   wherein the acceptance signal is forwarded to a head end.
7. The receiver according to feature 1, wherein the usage information contains usage information from a second user.
8. The receiver according to feature 1, wherein the processor is configured to filter the output of the advertisement based on at least one of a channel, a type of programming, and time and/or date.
9. The receiver according to feature 1, wherein the receiver is configured to be connected to a gateway, where the advertisement is received at the receiver via a gateway.
10. The receiver according to feature 1, wherein the receiver is configured to receive an advertisement pertaining to usage information from a second user.
11. A displayable user interface comprising:
   an advertisement/offer portion where the advertisement/offer relates to usage information received by a receiver;
   a user interaction portion configured to receive a user's acceptance of the advertisement/offer.
12. The displayable user interface according to feature 11, further comprising:
   a portion configured to display information pertaining to usage information received at the receiver from a sensor.
13. The displayable user interface according to feature 12, wherein the user interaction portion includes a rejection portion which signifies the user's rejection of the advertisement/offer.
14. A method comprising:
   receiving sensor input from a sensor where the sensor input relates to usage information of goods or services;
   determining if an advertisement pertaining to the usage information is stored locally; outputting an advertisement/offer to a user.
15. The method according to feature 14, further comprising:
   checking a head end for a new advertisement pretending to the usage information; and downloading the new advertisement.
16. The method according to feature 14, further comprising:
   creating a new advertisement relating to the usage information.
17. The method according to feature 14, further comprising: receiving an acceptance of the advertisement/offer.
18. The method according to feature 17, further comprising: transmitting the acceptance to a merchant/service provider for fulfillment.
19. A receiver comprising: a storage;
   a processor configured to receive programming from a head end and configured to receive an advertisement from the head end, the processor configured to forward the advertisement to the storage; and
   an output circuit connectable to a display,
   wherein the receiver is configured to combine the programming and the advertisement and forward the combination to the output circuit.
20. The receiver according to feature 19, wherein the processor further includes a video processor configured to combine the programming and the advertisement.
21. The receiver according to feature 19, wherein the receiver further includes a video processor configured to combine the programming and the advertisement as received from the processor.
22. The receiver according to feature 1, wherein the advertisement is output to multiple receivers based on usage information regarding the first user.
23. The receiver according to feature 1, wherein the advertisement output relates to usage information pertaining to two or more users.
24. The receiver according to feature 1, wherein the advertisement is output to multiple receivers based on usage information pertaining to two or more users.
25. A system comprising:
   a sensor configured to sense an event;
   a transmitter associated with the sensor, the transmitter configured to transmit a signal relating to an output from the sensor; a receiver including:
      an input configured to receive the signal transmitted from the transmitter;
      an interface configured to forward a second signal to a headend where the second signal is related to the signal received from the transmitter and configured to receive an advertisement; and
      an output configured to output a third signal, where the third signal is configured to be used with an interactive television application display.

## Claims

1. A receiver comprising:
an input configured to receive usage information from a sensor; a processor configured to match usage information from the sensor with an advertisement; and
an output circuit configured to output the advertisement to a first user.

2. The receiver according to claim 1, wherein the usage information relates to usage information from the first user and/or
wherein the output circuit is a transceiver and the transceiver is configured to output the advertisement to a display, and/or
wherein the receiver is a set-top box.

3. The receiver according to claim 1 or claim 2, wherein the output circuit is a transceiver and the transceiver is configured to output the advertisement to a display and
wherein the processor is configured to combine the advertisement with programming.

4. The receiver according to any preceding claim, wherein the output circuit is a transceiver and the transceiver is configured to output the advertisement to a display and
wherein the transceiver is configured to receive an acceptance signal from the first user, and
wherein the acceptance signal is forwarded to a head end.

5. The receiver according to claim 1, wherein the usage information contains usage information from a second user and/or
wherein the processor is configured to filter the output of the advertisement based on at least one of a channel, a type of programming, and time and/or date and/or
wherein the receiver is configured to be connected to a gateway, where the advertisement is received at the receiver via a gateway and/or
wherein the receiver is configured to receive an advertisement pertaining to usage information from a second user.

6. The receiver according to any preceding claim, wherein the advertisement is output to multiple receivers based on usage information regarding the first user and/or
wherein the advertisement output relates to usage information pertaining to two or more users and/or
wherein the advertisement is output to multiple receivers based on usage information pertaining to two or more users.

7. A displayable user interface comprising:
an advertisement/offer portion where the advertisement/offer relates to usage information received by a receiver;
a user interaction portion configured to receive a user's acceptance of the advertisement/offer.

8. The displayable user interface according to claim 6, further comprising:
a portion configured to display information pertaining to usage information received at the receiver from a sensor and wherein the user interaction portion may include a rejection portion which signifies the user's rejection of the advertisement/offer.

9. A method comprising:
receiving sensor input from a sensor where the sensor input relates to usage information of goods or services;
determining if an advertisement pertaining to the usage information is stored locally; outputting an advertisement/offer to a user.

10. The method according to claim 9, further comprising:
checking a head end for a new advertisement pretending to the usage information; and downloading the new advertisement and/or
creating a new advertisement relating to the usage information and/or
receiving an acceptance of the advertisement/offer and, when an acceptance of the advertisement/offer is received, the method may further comprise: transmitting the acceptance to a merchant/service provider for fulfillment.

11. A receiver comprising: a storage;
a processor configured to receive programming from a head end and configured to receive an advertisement from the head end, the processor configured to forward the advertisement to the storage; and
an output circuit connectable to a display,
wherein the receiver is configured to combine the programming and the advertisement and forward the combination to the output circuit.

12. The receiver according to claim 11, wherein the processor further includes a video processor configured to combine the programming and the advertisement.

13. The receiver according to claim 10 or claim 11, wherein the receiver further includes a video processor configured to combine the programming and the advertisement as received from the processor.

14. A system comprising:
a sensor configured to sense an event;
a transmitter associated with the sensor, the transmitter configured to transmit a signal relating to an output from the sensor; a receiver including:
an input configured to receive the signal transmitted from the transmitter;
an interface configured to forward a second signal to a headend where the second signal is related to the signal received from the transmitter and configured to receive an advertisement; and
an output configured to output a third signal, where the third signal is configured to be used with an interactive television application display.
